**Europäisches Patentamt**

**European Patent Office**

**Office européen des brevets**

(19)

(11) Veröffentlichungsnummer: **0 088 243**
A2

# EUROPÄISCHE PATENTANMELDUNG

(12)

(21) Anmeldenummer: **83101095.4**

(22) Anmeldetag: **05.02.83**

(51) Int. Cl.³: **G 01 N 21/89**

(30) Priorität: **05.03.82 DE 3208042**

(43) Veröffentlichungstag der Anmeldung: **14.09.83**
**Patentblatt 83/37**

(84) Benannte Vertragsstaaten: **AT BE CH DE FR GB IT LI LU NL SE**

(71) Anmelder: **Feldmühle Aktiengesellschaft, Fritz-Vomfelde-Platz 4, D-4000 Düsseldorf 11 (DE)**

(72) Erfinder: **Farwick, Gerhard, D-4817 Leopoldshöhe 1 (DE)**
Erfinder: **Haubold, Wolfgang, Kollwitzstrasse 73, D-4800 Bielefeld 1 (DE)**

(74) Vertreter: **Uhlmann, Hans, Dr. rer.nat., Dipl.-Chem., Gladbacher Strasse 189, D-4060 Viersen 1 (DE)**

(54) **Verfahren zum Prüfen von sich in einer Richtung bewegenden Materialien.**

(57) Bei der Prüfung von Werkstücken, die in einer Richtung gefördert werden und auch bei der Prüfung von laufenden Materialbahnen auf ungerichtete Längs- oder Querfehler, wird ein fliegender Lichtpunkt eingesetzt. Die zu prüfenden Materialien reflektieren das auf sie auftreffende Licht, das über einen fotoelektrischen Wandler empfangen und in Impulse übersetzt wird. Der zur Abtastung benutzte Lichtfleck ist ellipsenförmig verstreckt und verläuft während eines Abtastzyklus unter einem konstanten Winkel zur Förderrichtung der Materialien. Vor jedem Abtastzyklus wird der Winkel auf einen anderen Wert eingestellt, wodurch unterschiedliche Fehlerverlaufsrichtungen voll erfaßt werden. Die Abtastung des gleichen Materialbereiches erfolgt mehrfach, jeweils mit einem unterschiedlichen Winkel.

### Verfahren zum Prüfen von sich in einer Richtung bewegenden Materialien.

Die Erfindung betrifft ein Verfahren zum Prüfen von sich in einer Richtung bewegenden Materialien, wie Bahnen oder einzelne Werkstücke auf ungerichtete Längs- und/oder Querfehler mittels eines fliegenden Lichtpunktes, wobei die zu prüfenden Materialien das auf sie auftreffende Licht reflektieren, das über mindestens einen fotoelektrischen Wandler empfangen, in Impulse übersetzt und einer Auswertestufe zugeführt wird.

Aus der DE-PS 24 6o o77 ist eine Vorrichtung zum Prüfen von ebenen, stark reflektierenden Flächen bekannt, bei der zwischen Lichtquelle und umlaufendem Spiegelrad eine Zylinderlinse eingebaut ist, die den fliegenden Lichtpunkt in Maschinenlaufrichtung zu einem schmalen Lichtstrich längsverstreckt, der eine Breite zwischen o,1 und 1 mm und eine Länge zwischen 1 und 1oo mm aufweist. Mit dieser Vorrichtung ist es möglich, feinste, sich im wesentlichen parallel zur Laufrichtung der Materialbahn erstreckende Fehler zu erfassen. Nicht erfaßt werden mit dieser Vorrichtung jedoch feine, linienförmige Fehler, die ungerichtet sind, sich also in einem beliebigen Winkel zur Laufrichtung der Bahn erstrecken. Der vorliegenden Erfindung liegt die Aufgabe zu Grunde, feine Fehler mit größerer Längsausdehnung an der Oberfläche von sich in einer
Richtung bewegenden Materialien zu erfassen, ohne
Rücksicht auf den Verlauf der Längenausdehnung, bezogen auf die Materiallaufrichtung.

Unter Materialien im Sinne der vorliegenden Erfindung sind dabei sowohl Werkstoffbahnen, also beispielsweise Flachglas oder Walzbleche, desweiteren
Halbzeuge, wie Profileisen, aber auch fertig bearbeitete Werkstücke, wie beispielsweise Walzen
oder Wellen, zu verstehen. Selbstverständlich
müssen alle Materialien dabei im Prüfbereich geführt werden, wobei jedoch die Führung nicht Gegenstand der vorliegenden Erfindung ist.

Gelöst wird diese Aufgabe durch ein Verfahren, das
durch die Kombination folgender Merkmale gekennzeichnet ist:

Der zur Abtastung benutzte Lichtfleck ist ellipsenförmig verstreckt,

die Verstreckungsrichtung des Lichtfleckes verläuft während eines Abtastzyklus unter einem konstanten Winkel $\alpha$ zu der Förderrichtung der Materialien,

der Winkel $\alpha$ wird vor jedem Abtastzyklus auf
einen anderen Wert eingestellt,

die sich aus der Abtastung im fotoelektrischen
Wandler ergebenden Analogsignale werden in der
Auswertestufe untersucht und ausgewertet.

Abtastaggregate, die mit einem fliegenden Lichtpunkt
arbeiten, sind darauf angewiesen, daß der Unterschied der reflektierten Strahlung zwischen fehler-

0088243

freier und fehlerhafter Oberfläche möglichst groß ist. Die Lichtpunkte sind daher im allgemeinen sehr klein gehalten und liegen im Bereich von einem mm². Fehler, die gleich oder größer wie der abtastende Lichtfleck sind, ergeben daher ein sehr starkes Signal, wohingegen kleine Fehler, wie z.B. Haarrisse, oder Kratzer, die nur einen Bruchteil des Abtastlichtfleckes flächenmäßig einnehmen, auch nur zu einem Bruchteil des möglichen Impulses führen. Durch Verstrecken des runden Lichtfleckes zu einer Ellipse, wird bei gleichem Flächeninhalt des Lichtfleckes eine größere Fehlerfläche erfaßt, d.h., daß sich ein stärkerer Kontrast und damit ein stärkerer Fehlerimpuls ergibt.

Bei der Prüfung von Materialien, wie beispielsweise einer Glasbahn, ist aber nicht vorhersehbar, in welcher Richtung die Fehler verlaufen. Es wäre also denkbar, daß der ellipsenförmig verstreckte Lichtfleck gerade senkrecht zu dem Fehler verläuft, der gefunden werden soll. Dadurch ergäbe sich ein minimaler Kontrast, der praktisch als Impuls nicht auswertbar ist. Die Verstreckungsrichtung des Lichtfleckes, der während eines Abtastzyklus konstant unter einem bestimmten Winkel $\alpha$ zur Längsachse der Förderrichtung verläuft, wird deshalb jeweils vor Beginn des Abtastzyklus auf einen anderen Wert eingestellt, d.h., daß der Lichtfleck nach mehreren Abtastzyklen zumindest einen Halbkreis beschrieben hat. Die Anzahl der Verstellungen, die erforderlich sind, um diesen Halbkreis zu erhalten, richtet sich nach der Feinheit der Fehler, die noch erfaßt werden müssen. Zweckmäßig liegt der Winkel zwischen lo und 6o Grad, d.h., daß 3 bis 18 Schaltungen und damit auch Abtastzyklen zur sicheren Erfassung eines auch sehr feinen Fehlers ausreichen..Die Drehzahl des Spiegelrades, durch welches der abtastende Lichtfleck über die Prüffläche bewegt wird, ist dabei so gewählt, daß sich eine geringfügige Überdeckung der abtastenden Lichtflecken ergibt.

Der ellipsenförmigen Verstreckung des Lichtfleckes kommt, insbesondere wenn die Prüfvorrichtung zum Prüfen auf Risse in der Oberfläche der Materialien eingesetzt wird, erhöhte Bedeutung zu. Risse verlaufen in vielen Fällen in einer Art Zick-Zack-Form, so daß der Fehler sowohl eine bestimmte Länge als auch eine bestimmte Breite aufweist. Die Länge wird dabei durch die Verstreckungsrichtung des Lichtfleckes erfaßt, während die Breite durch die Breite der Ellipse abgedeckt werden kann.

Während eines Abtastzyklus verläuft die Verstreckungsrichtung des Lichtfleckes unter einem konstanten Winkel $\alpha$ zur Förderrichtung der Materialien. Die Auswertung der dabei erhaltenen Signale ermöglicht dadurch die Angabe,unter welchem Winkel der Fehler im Werkstück, bzw. der Materialbahn verläuft, gleichzeitig wird mit einer bestimmten Winkelstellung selbstverständlich das größte Fehlersignal erhalten.

Vorzugsweise erfolgt die Abtastung der Materialien mit mehreren ellipsenförmig verstreckten Lichtflecken, deren Längsrichtung zueinander um den Winkel $\alpha$ versetzt sind. Es besteht zwar die Möglichkeit, ein optisches System so anzuordnen, daß eine Drehung des ellipsenförmig verstreckten Lichtfleckes möglich ist, dazu muß aber dieses optische System, das im allgemeinen aus einer Anordnung von Prismen besteht, sich drehen. Diese Drehung darf aber nicht so erfolgen, daß bei einer Abtastung sich der verstreckte

- 5 -

0088243

Lichtfleck auf der zu prüfenden Materialbahn dreht, weil dann eine Aussage über den Winkelverlauf des Fehlers nicht möglich ist und außerdem nicht gewährleistet ist, daß der Fehler in seiner größten Ausdehnungsrichtung erfaßt wird. Die Rotationsgeschwindigkeit des optischen Systems muß daher entweder so hoch sein, daß während eines Abtastzyklus praktisch keine Veränderung des Winkels $\alpha$ stattfindet, oder die Winkelverstellung muß schrittweise vor jedem Abtastzyklus erfolgen. Da der längsverstreckte Lichtfleck auf ein Spiegelrad projeziert und durch die Drehung des Spiegelrades nach der Reflektion über die zu prüfenden Materialbahnen fliegt, ist die Geschwindigkeit, mit der die Drehung des optischen Systems zur Winkelverstellung des Winkels $\alpha$ erfolgen muß, von der Zahl der Spiegel und der Drehzahl des Spiegelrades abhängig. Die Drehzahl des Spiegelrades und die Anzahl der Spiegel richtet sich wiederum nach der Transportgeschwindigkeit der zu prüfenden Materialien und der Ausdehnung des Lichtfleckes, da ein lückenloses Prüfen der Materialoberfläche erforderlich ist. Damit stößt man bereits bei niedrigen Materialgeschwindigkeiten an die Grenze der technisch möglichen Drehzahl für das optische System zur Verstreckung des Lichtfleckes. Für hohe Materialbahngeschwindigkeiten ist es daher erforderlich, mehrere verstreckte Lichtflecke einzusetzen, die nacheinander auf das Spiegelrad projeziert und von diesem über die zu prüfenden Materialien geleitet werden.

Eine zweckmäßige Ausgestaltung der Erfindung sieht vor, daß alle Lichtflecke, die benötigt werden, aus einem Strahl, durch Strahlteilung erzeugt werden. Die Strahlteilung kann dabei durch Ausblenden einzelner Kreissegmente aus einem Lichtpunkt erfolgen.
In diesem Fall muß das Kreissegment jedoch wieder
zu einem feinen Punkt fokussiert und von diesem
Punkt auf die gewünschte Größe aufgeweitet und
dann verstreckt werden, was zusätzliche, optische
Systeme erfordert. Vorteilhafter erfolgt daher
die Strahlteilung durch hintereinander geschaltete
teildurchlässige Spiegel, die so angeordnet und
ausgewählt sind, daß jeder abgelenkte Teilstrahl
die gleiche Lichtintensität besitzt. Ein Fokussieren
und Aufweiten des Lichtpunktes ist damit überflüssig.
Die ursprünglich vorhandene Verteilung der Lichtintensität auf der gesamten Fläche bleibt erhalten,
wenn auch die Lichtintensität als solche entsprechend der Anzahl der Spiegel und damit der erzeugten
Abtastlichtflecke reduziert wird. Werden also beispielsweise für das Prüfen einer Materialbahn vier
Lichtflecke benötigt, die zueinander um jeweils
45 Grad versetzt sind, so muß jeder der erforderlichen Spiegel 25 % des zur Verfügung stehenden
Lichtes reflektieren. Als Lichtquelle wird dabei
im allgemeinen ein Laserstrahler eingesetzt, weil
sich dadurch ein praktisch parallelgerichtetes
Licht ergibt, das eine hohe Intensität aufweist.
Der erste Spiegel muß 25 % des auf ihn auftreffenden Lichtes reflektieren, sein Verhältnis Reflektion zu Transmission beträgt also 25 : 75.
Beim zweiten Spiegel beträgt das Verhältnis R : T
33 $\frac{1}{3}$ : 66 $\frac{2}{3}$. Beim dritten Spiegel 5o : 5o und
der vierte und letzte Spiegel weist eine Reflektion
von loo auf, d.h., daß das gesamte, auf ihn fallende Licht reflektiert wird, es ist also kein teildurchlässiger Spiegel.

0088243

Der Lichtstrahl kann bereits, bevor er auf den ersten teildurchlässigen Spiegel auftritt, verstreckt sein, so daß er einen ellipsenförmigen Lichtfleck bildet. Zweckmäßiger ist es jedoch, jeden, durch die Spiegel abgeteilten Teilstrahl zu verformen und dadurch den jeweiligen ellipsenförmigen Lichtfleck mit der entsprechenden Ausrichtung seiner Längsachse zu erhalten.

Vorteilhafter Weise werden dabei alle Teilstrahlen gleichzeitig auf ein rotierendes Polygon geworfen, wodurch im Normalfall gleichzeitig mit vier, jeweils im unterschiedlichen Winkel $\alpha$ zueinander angeordneten, verstreckten Lichtflecken die Abtastung erfolgt. Dadurch wird gleichzeitig eine größere Fläche abgetastet. Auf Grund der Anpassung der Abtastgeschwindigkeit an die Materialbahngeschwindigkeit wird jedoch jede Materialstelle von jedem Lichtfleck einmal bestrichen.

Bei einer besonders bevorzugten Ausgestaltung der Erfindung werden auch alle Teilstrahlen gleichzeitig auf das rotierende Polygon geworfen. Von diesen wird jedoch jeweils nur ein Teilstrahl reflektiert und auf das zu prüfende Material gelenkt.

Eine vorteilhafte Vorrichtung zur Durchführung des beschriebenen Verfahrens besteht aus einer Lichtquelle, insbesondere einem Laserstrahler, zur Erzeugung eines parallelen Lichtstrahles mit kleinem Durchmesser und hoher Energie, einem rotierenden Polygon zur Ablenkung des Lichtstrahles über die zu prüfenden Materialien, einem fotoelektrischen Wandler zur Aufnahme des von den Materialien reflektierten Lichtes und Umwandlung dieses Lichtes

- 8 -  0088243

in elektrische Impulse, sowie einer Auswertestufe zur Untersuchung, Aufschlüsselung und dem Vergleich der erhaltenen Signale mit den vorgegebenen Werten. Sie ist dadurch gekennzeichnet, daß zwischen der Lichtquelle und dem rotierenden Polygon ein optisches System zur Aufteilung und Verstreckung des Lichtstrahles angeordnet ist.

Das optische System zur Lichtteilung besteht zweckmäßig aus mehreren, einander zugeordneten, teildurchlässigen Spiegeln zur Strahlaufteilung, denen jeweils mindestens ein Prisma nachgeschaltet ist. Es ist auch möglich, mittels Lochblenden einzelne Bereiche des Strahles abzuleiten.

Bevorzugt wird jedoch eine Vorrichtung, bei der das optische System ein Lichtleiter ist, der eine im wesentlichen kreisförmige Fläche für den Lichteintritt aufweist, in eine Mehrzahl von gleich großen Flächen für den Lichtaustritt unterteilt ist, wobei die Summe der Querschnitte der Lichtaustrittsflächen gleich der Lichteintrittsfläche ist. Als Lichtleiter kann dabei sowohl ein Glasfaserkabel als auch ein Lichtleiter aus Kunststoff, beispielsweise aus Polymethacrylsäureestern eingesetzt werden. Die Verwendung von Glasfaserkabel gestattet eine sehr einfache Aufteilung auf die verschiedenen Lichtaustrittsflächen und weist den weiteren entscheidenden Vorteil auf, daß Glasfasern sehr biegsam sind und somit auch eine Umlenkung des Lichtes in beliebige Winkel gestatten. Ein weiterer Vorteil liegt darin, daß die Lichtaustrittsfläche beliebig geformt sein kann, d.h., daß es mit nur geringem Aufwand möglich ist, die vorteilhafte Ausgestaltung der Lichtaustritts-

0088243

fläche als Ellipse durchzuführen.

Aus Kunststoff bestehende Lichtleiter weisen demgegenüber den Vorteil der größeren Preisgünstigkeit auf, d.h., daß sie aus einem einzigen Preßstück bestehen können. Bei derart massiven Lichtleitern, die nicht in sich, wie die Glasfaserstränge, biegsam sind, ist es möglich, die Längsachsen der Ellipsen der Austrittslichtflächen, wie das eine zweckmäßige Ausgestaltung der Erfindung fordert, ohne zusätzliche Hilfsmittel zueinander um einen Winkel $\alpha$ zu versetzen. Dieser Winkel $\alpha$ liegt zwischen 10 und 60 Grad. Er ergibt sich durch die geforderte Genauigkeit bei der Fehlererfassung. Je kleiner der Winkel desto größer ist die Anzahl der erforderlichen elliptischen Lichtaustrittsflächen, die auf das Polygon gerichtet sind.

Gemäß einer bevorzugten Ausgestaltung der Erfindung ist jede parallel zur Rotationsachse des Polygons verlaufende Fläche des Polygons in Segmente unterteilt, von denen mindestens eines nicht verspiegelt ist. Dabei entspricht zweckmäßig die Anzahl der Segmente pro Fläche der Anzahl der Lichtaustrittsflächen des Lichtleiters. Vorzugsweise ist dabei nur ein Segment jeder Polygonfläche verspiegelt.

Die Polygonflächen sind Rechtecke. Werden diese Rechtecke in kleinere Rechtecke unterteilt, deren Zahl der Anzahl der Lichtaustrittsflächen entspricht, so ist es möglich, mit einem einzigen Polygon nacheinander jede der um die Längsachsen zueinander um einen Winkel versetzten verstreckten Lichtflecke über das zu prüfende Gut zu bewegen. Die verstreckten Lichtflecke werden dabei zwar kontinuierlich auf das Polygon projeziert, da aber immer nur einer auf einen verspiegelten Teil der Polygonfläche fällt und die verspiegelten Teile untereinander versetzt sind, wird immer nur mit einem verstreckten Lichtfleck abgetastet.

Die Erfindung wird nachstehend an Hand der Zeichnungen erläutert:

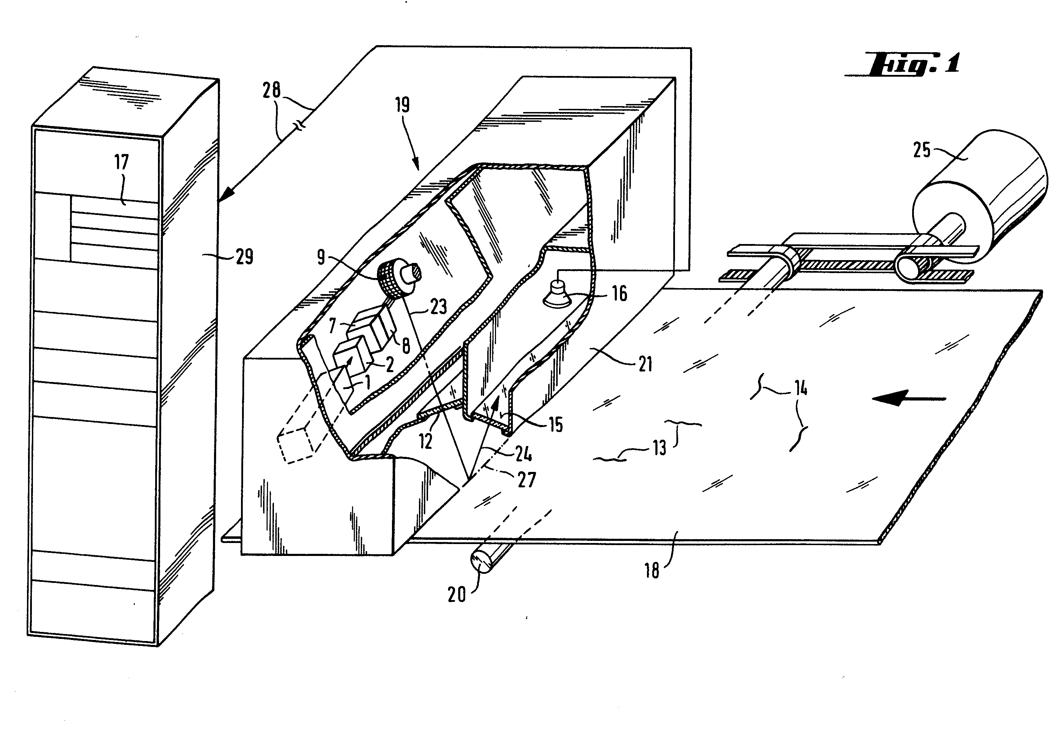

Fig. 1 zeigt in schematischer Darstellung die Anordnung der Prüfvorrichtung,

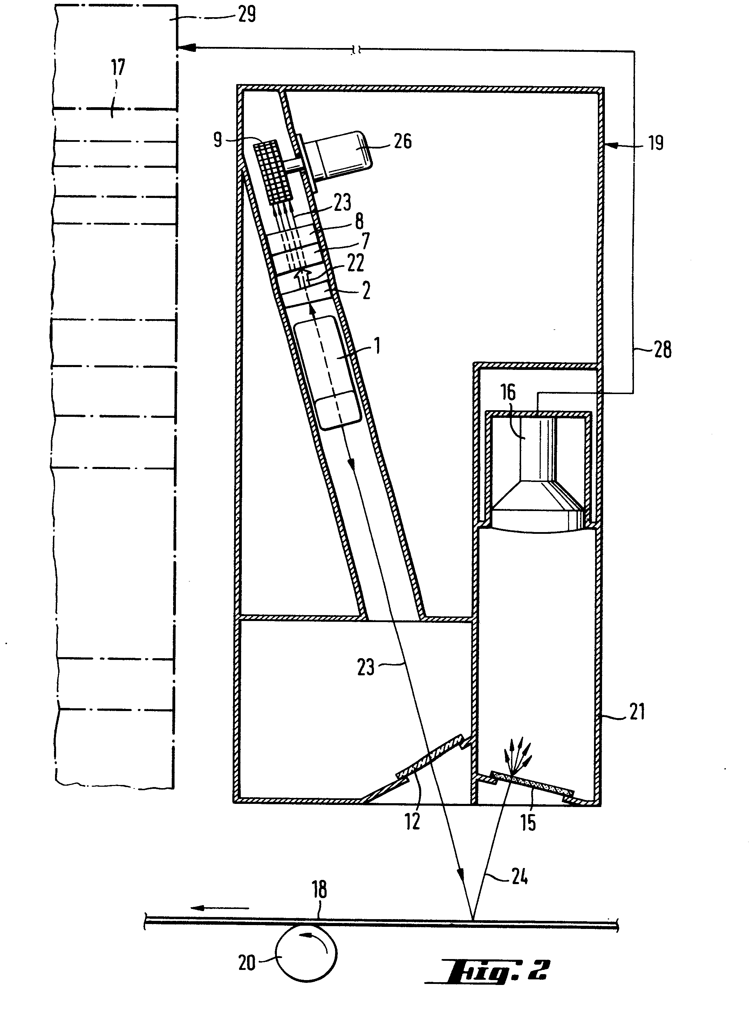

Fig. 2 einen Schnitt durch die Prüfvorrichtung,

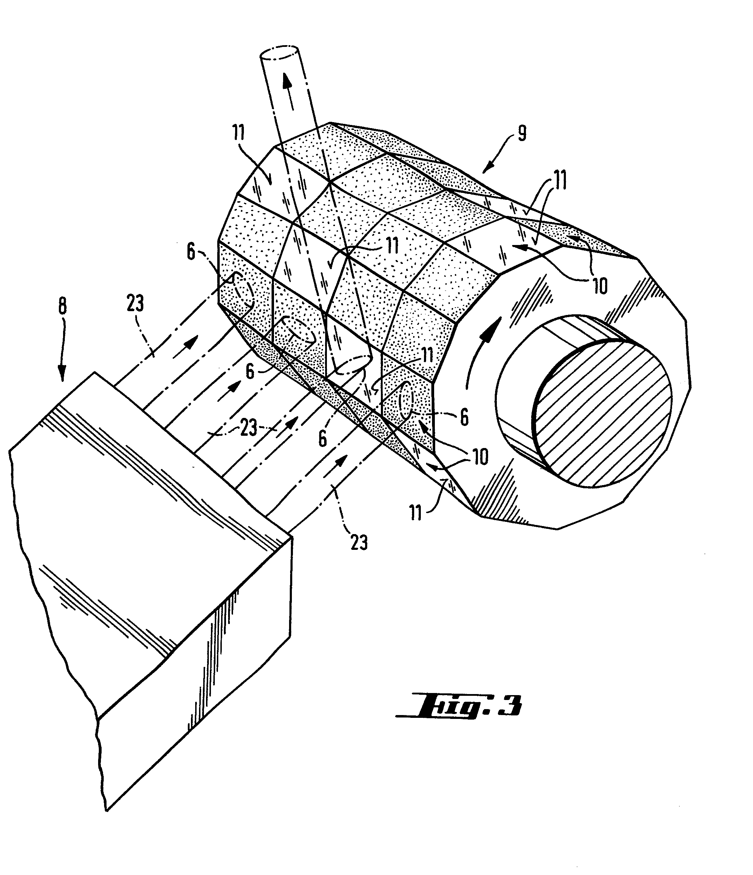

Fig. 3 im Detail das Polygon,

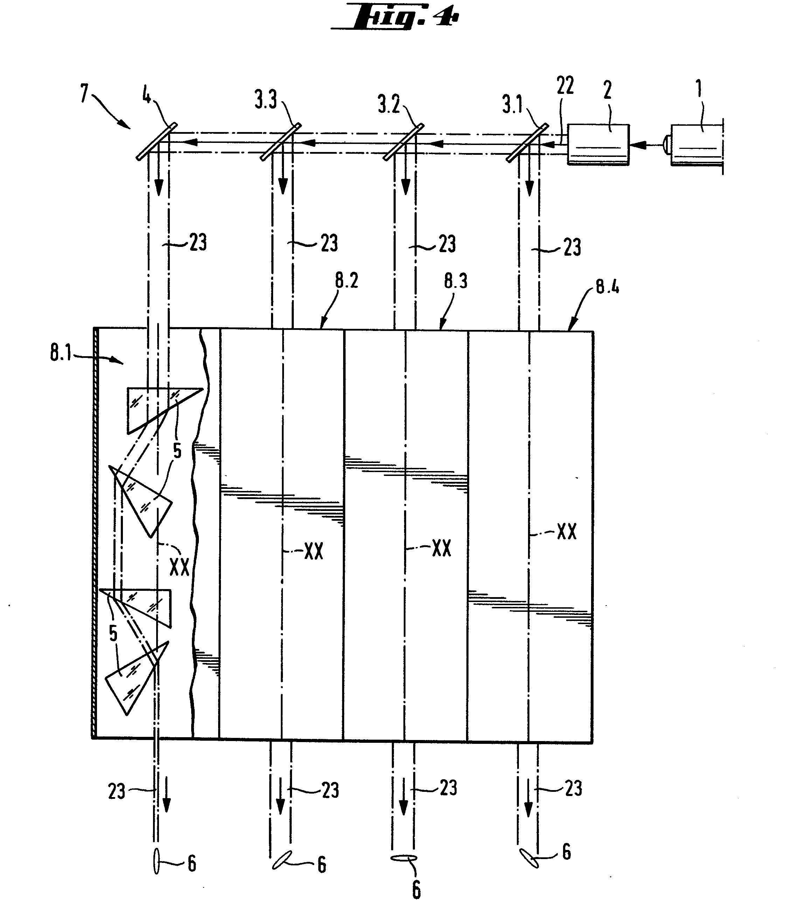

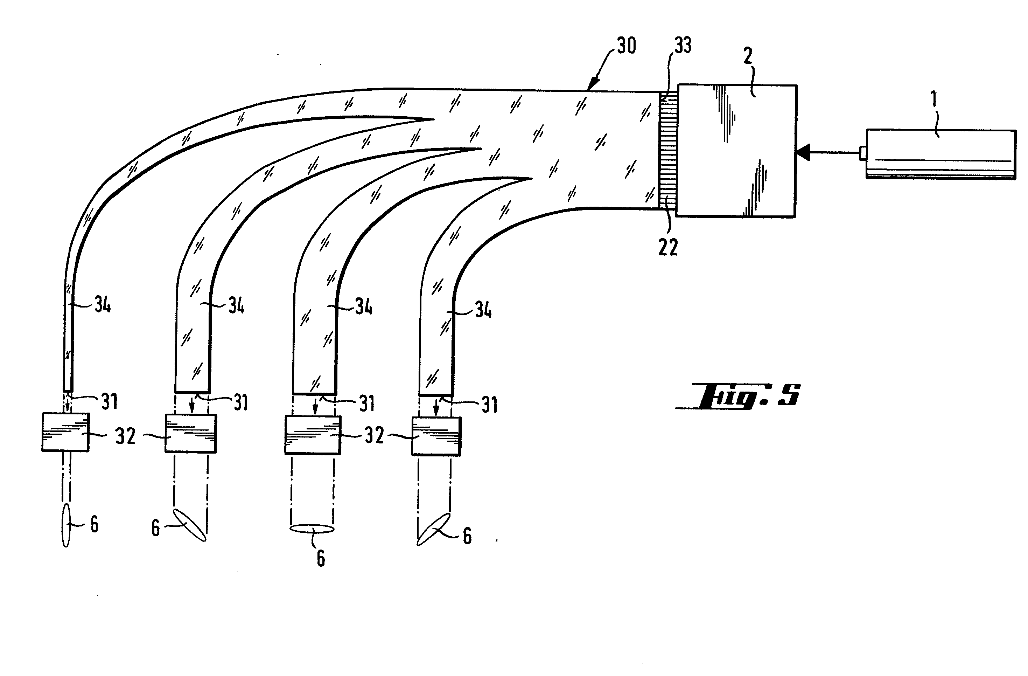

Fig. 4 und 5 den Strahlenteiler mit der Verstreckungsoptik.

Die Materialbahn 18 wird über Walzen 2o, die mittels eines Motors 25 angetrieben werden, unter der Prüfvorrichtung 19 hindurchgeführt. In der Prüfvorrichtung 19 ist ein Laserstrahler 1 angeordnet, dessen Strahl auf eine Aufweitungsoptik 2 gerichtet ist. Der aufgeweitete Laserstrahl 22 trifft auf den Strahlenteiler 7 und wird in Teilstrahlen 23 aufgeteilt. Die einzelnen Teilstrahlen 23 werden in der Verstreckungsoptik 8 so verstreckt, daß jeder Teilstrahl einen elliptisch verstreckten Lichtfleck 6 auf dem Polygon 9 abbildet. Das Polygon 9 wird durch einen hochtourigen Motor 26 angetrieben, wodurch der vom Polygon 9 auf die Materialbahn 18 geworfene, verstreckte Lichtfleck über die volle Bahnbreite geführt wird und hier die Abtastlinie 27 bildet. Der von der Abtastlinie 27 reflektierte Strahl 24 gelangt in den fotoelektrischen Wandler 16 und von diesem über das Kabel 28 in den Schaltschrank 29, in dem sich die Auswertestufe 17 befindet. Tritt in der Materialbahn 18 ein Längsfehler 13, oder ein Querfehler 14 auf, so führt
das Auftreten dieses Fehlers zu einer Änderung der
reflektierten Lichtintensität, die über den fotoelektrischen Wandler 16 in der Auswertestufe 17
registriert und ausgewertet wird.

Die Prüfvorrichtung 19 ist in einem Gehäuse 21 angeordnet, das um das Eindringen von Staub zu vermeiden, unter geringem Überdruck steht. Die Austrittsöffnung für den Teilstrahl 23 ist durch eine
Glasscheibe 12 abgedeckt, der Eintrittsbereich für
den reflektierten Strahl 24 durch eine Mattglasscheibe 15.

Aus dem Laserstrahler 1 tritt der Laserstrahl in
die Aufweitungsoptik 2 ein und wird hier zu einem
Strahl von ca. 8 mm Durchmesser aufgeweitet. Dieser
aufgeweitete Strahl 22 fällt auf eine Reihe hintereinander angeordneter, teildurchlässiger Spiegel 3
(3.1, 3.2, 3.3). Der erste teildurchlässige Spiegel
3.1 hat dabei ein Verhältnis von Reflektion zu Transmission von 25 : 75. Er reflektiert 25% des auf ihn
aufgetroffenen Strahles 22, bei gleicher Größe des
Durchmessers, aber verminderter Lichtintensität, zu
der nachgeschalteten Verstreckungsoptik 8.4 .
Dreiviertel der Lichtintensität des aufgeweiteten
Strahles 22 passieren den teildurchlässigen Spiegel
3.1 und treffen auf den teildurchlässigen Spiegel
3.2 auf. Dieser Spiegel hat ein Verhältnis R : T
von $33\frac{1}{3} : 66\frac{2}{3}$ .
Ein Drittel der Lichtintensität wird also reflektiert und als Teilstrahl 23 zur Verstreckungsoptik
8.3 geführt. Zwei Drittel der Lichtintensität passieren den Spiegel 3.2 und treffen auf den dritten teildurchlässigen Spiegel 3.3, der ein Verhältnis R : T = 5o : 5o besitzt. 5o% der jetzt noch vorhandenen Lichtintensität werden als Teilstrahl 23 zu der Verstreckungsoptik 8.2 geleitet, der den teildurchlässige Spiegel 3.3 passierende Anteil fällt auf den Spiegel 4 und wird komplett als Teilstrahl 23 umgeleitet und in die Verstreckungsoptik 8.1 geführt. Damit besitzen alle Teilstrahlen 23 die gleiche Lichtintensität und den gleichen Durchmesser - von 8 mm - bevor sie in die Verstreckungsoptik 8 gelangen. Die Verstreckungsoptik 8 besteht aus mehreren, hintereinander geschalteten Prismen 5, die so unter einem Winkel angeordnet sind, daß das auf sie fallende Licht zu einem elliptischen Lichtfleck 6 verstreckt wird. Durch Verdrehen der einzelnen Verstreckungsoptiken 8 um ihre optische Achse XX um einen Winkel $\alpha$ von 45 Grad, ergeben sich Lichtflecken 6, deren Längsachse ebenfalls zueinander um 45 Grad gedreht ist.

Statt der vorbeschriebenen Aufteilung des aufgeweiteten Lichtstrahles 22, kann im Anschluß an die Aufweitungsoptik 2 auch ein Lichtleiter 3o eingesetzt werden, der eine runde Lichteintrittsfläche 33 aufweist, deren Durchmesser mit dem Durchmesser des aufgeweiteten Laserstrahles 22 identisch ist. Der Lichtleiter 3o teilt sich in 4 Lichtleitbögen 34 gleichen Querschnitts auf, die in Lichtaustrittsflächen 31 münden. Die Summe des Flächeninhalts der Lichtaustrittsflächen 31 ist dabei gleich der Lichteintrittsfläche 33. Den Lichtaustrittsflächen 31 ist ein Linsensystem 32 nachgeschaltet, das das austretende Licht parallel richtet und auf das Polygon 9 projeziert.

Das Polygon 9 weist zwölf Polygonflächen lo auf, wobei jede Polygonfläche lo in vier Segmente unterteilt ist. Von diesen Segmenten ist jedoch nur jeweils ein Segment als Spiegelfläche 11 ausgestaltet und gegenüber den Segmenten der vorhergehenden Polygonfläche lo um ein Segment versetzt, so daß bei einem Abtastvorgang immer nur ein elliptisch verstreckter Lichtfleck 6 mit einer bestimmten Richtung seiner Hauptachse über die Materialbahn 18 geführt wird. Auf Grund er hohen Abtastgeschwindigkeit passieren alle Lichtflecke 6 jeweils jeden Bereich der abzutastenden Materialbahn 18 und ergeben damit beim Auftreten eines Fehlers auch jeweils ein Signal, wenn der Fehler im wesentlichen in seiner Längsausdehnung erfaßt wurde. Dadurch ist es nicht nur möglich, unter beliebigem Winkel verlaufende Fehler zu erfassen, beispielsweise in einem Walzblech feine Haarrisse, die beim Abtasten mit einem runden Punkt auf Grund der geringen Lichtintensitätsänderung nicht erfaßt werden könnten, es ist zusätzlich auch möglich, eine Aussage über die Lage dieses Fehlers zu machen, d.h. also über den Winkelverlauf, bezogen auf die Laufrichtung der Materialbahn, woraus wiederum auf die Fehlerursache geschlossen werden kann.

Patentansprüche.

1. Verfahren zum Prüfen von sich in einer Richtung bewegenden Materialien, wie Bahnen oder einzelne Werkstücke auf ungerichtete Längs- und/oder Querfehler mittels eines fliegenden Lichtpunktes, wobei die zu prüfenden Materialien das auf sie aufttreffende Licht reflektieren, das über mindestens einen fotoelektrischen Wandler empfangen, in Impulse übersetzt und einer Auswertestufe zugeführt wird, gekennzeichnet durch die Kombination folgender Merkmale:

Der zur Abtastung benutzte Lichtfleck ist ellipsenförmig verstreckt,

die Verstreckungsrichtung des Lichtfleckes verläuft während eines Abtastzyklus unter einem konstanten Winkel $\alpha$ zu der Förderrichtung der Materialien,

der Winkel $\alpha$ wird vor jedem Abtastzyklus auf einen anderen Wert eingestellt,

die sich aus der Reflektion im fotoelektrischen Wandler ergebenden Analogsignale werden in der Auswertestufe untersucht und ausgewertet.

2. Verfahren nach Anspruch 1, dadurch gekennzeichnet, daß der Winkel $\alpha$ vor jedem Abtastzyklus um lo bis 6o Grad weitergeschaltet wird.

3. Verfahren nach einem der Ansprüche 1 und 2, dadurch gekennzeichnet, daß mehrere, ellipsenförmig verstreckte Lichtflecke zur Abtastung eingesetzt werden, deren Längsrichtung zueinander unter unterschiedlichem Winkel verläuft.

4. Verfahren nach einem der Ansprüche 1 bis 3, dadurch gekennzeichnet, daß die Lichtflecke aus einem Strahl durch Strahlteilung erzeugt werden.

5. Verfahren nach einem der Ansprüche 1 bis 4, dadurch gekennzeichnet, daß die Strahlteilung so durch hintereinander geschaltete teildurchlässige Spiegel erfolgt, daß jeder abgelenkte Teilstrahl die gleiche Lichtintensität besitzt.

6. Verfahren nach einem der Ansprüche 1 bis 5, dadurch gekennzeichnet, daß jeder Teilstrahl einen ellipsenförmigen Lichtfleck bildet.

7. Verfahren nach einem der Ansprüche 1 bis 6, dadurch gekennzeichnet, daß alle Teilstrahlen gleichzeitig auf ein rotierendes Polygon geworfen werden.

8. Verfahren nach einem der Ansprüche 1 bis 7, dadurch gekennzeichnet, daß jeweils nur ein Teilstrahl von jeweils nur einer Polygonfläche reflektiert und auf das zu prüfende Material gelenkt wird.

9. Vorrichtung zur Durchführung des Verfahrens nach einem der Ansprüche 1 bis 8, bestehend aus einer Lichtquelle, insbesondere einem Laserstrahler, zur Erzeugung eines parallelen Lichtstrahles mit kleinem Durchmesser und hoher Energie,

einem rotierenden Polygon zur Ablenkung des Lichtstrahles über die zu prüfenden Materialien,

einem fotoelektrischen Wandler zur Aufnahme des von den Materialien reflektierten Lichtes und Umwandlung dieses Lichtes in elektrische Impulse,

sowie einer Auswertestufe zur Untersuchung, Aufschlüsselung und dem Vergleich der erhaltenen Signale mit vorgegebenen Werten,

dadurch gekennzeichnet,

daß zwischen der Lichtquelle (1) und dem rotierenden Polygon (9) ein optisches System zur Aufteilung und Verstreckung des Lichtstrahles angeordnet ist.

10. Vorrichtung nach Anspruch 9, dadurch gekennzeichnet, daß das optische System aus einem Satz teildurchlässiger Spiegel (3) zur Aufteilung des Lichtstrahles besteht, denen jeweils mindestens ein Prisma (5) zur Längsverstreckung des Lichtfleckes zugeordnet ist.

11. Vorrichtung nach Anspruch 9, dadurch gekennzeichnet, daß das optische System ein Lichtleiter (3o) ist, der eine im wesentlichen kreisförmige

- 17 -

0088243

Fläche für den Lichteintritt aufweist, in eine Mehrzahl von gleich großen Flächen für den Lichtaustritt unterteilt ist, wobei die Summe der Querschnitte der Lichtaustrittsflächen (31) gleich der Lichteintrittsfläche (33) ist.

12. Vorrichtung nach Anspruch 11, dadurch gekennzeichnet, daß die Lichtaustrittsflächen (31) Ellipsen sind.

13. Vorrichtung nach einem der Ansprüche 1o bis 12 dadurch gekennzeichnet, daß die Längsachsen der Ellipsen zueinander um einen Winkel $\alpha$ versetzt sind.

14. Vorrichtung nach einem der Ansprüche 9 bis 13, dadurch gekennzeichnet, daß jede parallel zur Rotationsachse des Polygons (9) verlaufende Fläche (1o) in Segmente unterteilt ist, von denen mindestens eines nicht verspiegelt ist.

15. Vorrichtung nach einem der Ansprüche 9 bis 14, dadurch gekennzeichnet, daß die Anzahl der Segmente pro Fläche der Anzahl der Lichtaustrittsflächen (31) entspricht.

16. Vorrichtung nach einem der Ansprüche 9 bis 15, dadurch gekennzeichnet, daß nur ein Segment jeder Polygonfläche (1o) verspiegelt ist.

Fig. 1

0088243

0088243

**Fig. 2**

*Fig. 3*

# *Fig. 4*

Fig. 5

0088243